# EUROPEAN PATENT APPLICATION

(11) **EP 3 131 004 A1**
(43) Date of publication of application: **15.02.2017**
(21) Application number: 14827997.9
(22) Date of filing: 11.04.2014
(51) Int. Cl.: G06F 9/38, G06F 9/46

(54) **PROCESSOR AND METHOD**

(71) Applicant: Murakumo Corporation, Tokyo 153-0061 (JP)
(72) Inventor: WATANABE, Takahiro, Tokyo 153-0061 (JP)
(74) Representative: Plougmann Vingtoft a/s
(86) International application number: PCT/JP2014/060518
(87) International publication number: WO 2015/155894

(57) **Abstract**

A task is to perform parallel processing by a processor efficiently. A processor includes a plurality of processing units prepared for processing an instruction to be implemented at a plurality of stages and corresponding to the respective stages, and control means for controlling the plurality of processing units such that a processing unit for a preceding stage consecutively performs processing of a plurality of instructions, and then a processing unit for a subsequent stage consecutively performs processing of the plurality of instructions for which processing by the processing unit for the preceding stage has ended.

## Description

### BACKGROUND OF THE INVENTION

### 1. Field of the Invention

The present invention relates to a processor.

### 2. Description of the Related Art

Conventionally, in order to provide an execution core architecture that reduces the occurrence of a bubble within an execution pipeline, a technique has been proposed (see Japanese Patent Application Laid-open No. 2005-182825) in which a dispatch circuit determines which instruction within a buffer is ready to be executed, issues a ready instruction for execution, and issues an instruction from one thread before an instruction from a different thread regardless of which instruction has been fetched into the buffer first. When an instruction from a particular thread is issued, a fetch circuit allocates available buffer to the next instruction from the thread.

For the purpose of preventing the occurrence of a blocked state that leads to a thread failure, a processor has been proposed (see Japanese Translation of PCT Application No. 2006-502505) in which each of a plurality of hardware thread units of a multithread processor can include a corresponding local register updatable with the hardware thread unit, and the local register of a particular hardware thread unit stores a value identifying the next thread allowed to issue one or a plurality of instructions after the particular hardware thread unit has issued one or a plurality of instructions.

Patent Document 1: Japanese Patent Application Laid-open No. 2005-182825
Patent Document 2: Japanese Translation of PCT Application No. 2006-502505

Conventionally, so-called instruction pipelines have been employed for the purpose of improving the instruction throughput (number of instructions that can be executed per unit time), in the case where a processor such as a central processing unit (CPU) performs processing. In instruction pipelines, there is a type of pipeline in which a single thread is executed in a sequence of instruction pipelines, and there is a type of pipeline that is a so-called "cyclic pipeline" in which a plurality of threads are executed in sequential cycles of a sequence of pipelines.

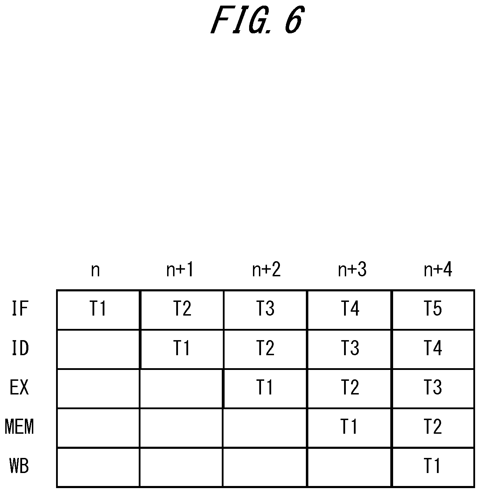

Fig. 6 is a view showing the concept of a conventional cyclic instruction pipeline. In an instruction pipeline, processing of each instruction is divided into a plurality of stages (processing elements) that can be executed independently, and the respective stages are mutually connected such that an input for one is an output from a preceding stage and an output from one is an input for a subsequent stage. Accordingly, processing in the respective stages is performed in parallel, and the instruction throughput is reduced as a whole. Fig. 6 shows an example in which a processing unit for performing processing according to each stage processes instructions according to five threads T1 to T5 in parallel.

However, processing of one stage is not necessarily completed in one clock cycle. Therefore, in a conventional instruction pipeline, a state (so-called bubble) where processing is not performed in a corresponding stage or another stage may occur to thus reduce the efficiency of parallel processing, due to causes such as an unpredictably long time being spent on waiting for a response in memory access, for example.

### SUMMARY OF THE INVENTION

In view of the problem described above, a task of the present invention is to perform parallel processing by a processor more efficiently.

In order to solve the task described above, the present invention employs the following means. That is, one example of this disclosure is a processor including: a plurality of processing units that are prepared for processing an instruction to be implemented at a plurality of stages and that correspond to the respective stages; and control means for controlling the plurality of processing units such that a processing unit for a preceding stage consecutively performs processing of a plurality of instructions, and then a processing unit for a subsequent stage consecutively performs processing of the plurality of instructions for which processing by the processing unit for the preceding stage has ended.

It may be such that the processor further includes a plurality of execution contexts for executing a plurality of threads, and the control means controls the plurality of processing units such that, in a case where the plurality of threads are to be executed, a processing unit for a preceding stage consecutively performs processing of instructions according to at least two or more threads out of the plurality of threads, and then a processing unit for a subsequent stage consecutively performs processing of the instructions according to the two or more threads for which processing by the processing unit for the preceding stage has ended.

It may be such that the plurality of threads are assigned to any of a plurality of groups, and the control means controls the plurality of processing units such that instructions of threads assigned to different groups are executed at a same time point.

It may be such that the number of threads assigned to the group is changeable through setting.

It may be such that the groups are prepared in a number based on the number of processing units provided to the processor.

It may be such that the control means controls the plurality of processing units such that, after processing of instructions according to two or more threads assigned to a first group has ended, instructions according to two or more threads assigned to a second group are processed while the instructions according to the two or more threads assigned to the first group are processed by another processing unit.

It may be such that the control means controls the plurality of processing units such that a processing unit for a preceding stage consecutively performs processing of instructions according to all threads to be processed, and then a processing unit for a subsequent stage consecutively performs processing of the instructions according to all threads to be processed.

It is possible to understand the present invention as a method executed by a computer system, an information processing device, or a computer or a program to be executed by a computer. The present invention can also be understood as such a program recorded on a recording medium readable by a computer, other devices or machines, or the like. A recording medium readable by a computer or the like refers to a recording medium that stores information such as data or a program electrically, magnetically, optically, mechanically, or through chemical action to be readable through a computer or the like.

With the present invention, it is possible to perform parallel processing by a processor more efficiently.

### BRIEF DESCRIPTION OF THE DRAWINGS

Fig. 1 is a view showing the outline of a system according to an embodiment;
Fig. 2 is a view showing the configuration of a CPU according to the embodiment;
Fig. 3 is a view showing the configuration of an execution context to be processed by the CPU in the embodiment;
Fig. 4 is a flowchart showing the flow of control in each processing unit according to the embodiment;
Fig. 5 is a view showing one example of clock cycles in the case of performing control according to the embodiment; and
Fig. 6 is a view showing the concept of a conventional cyclic instruction pipeline.

### DESCRIPTION OF THE PREFERRED EMBODIMENTS

A processor and a method as an embodiment according to this disclosure will be described below based on the drawings. Note that the embodiment described below is an exemplification. The processor and the method according to this disclosure are not limited to the specific configuration described below. In implementation, a specific configuration in accordance with an embodiment may be appropriately employed, or various improvements or modifications may be performed.

### <System configuration>

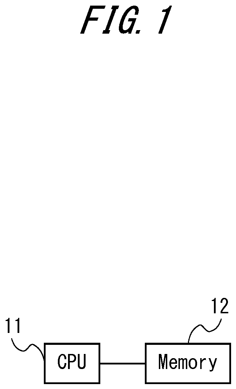

Fig. 1 is a view showing the outline of a system according to the embodiment. The system according to this embodiment is provided with a CPU 11 and a memory (random access memory (RAM)) 12. The memory 12 is directly connected to the CPU 11 to be capable of reading and writing. As a method of connecting the memory 12 and the CPU 11 in this embodiment, a method in which a port (processing unit-side port) provided to the CPU 11 and a port (storage device-side port) provided to the memory 12 are serially connected is employed. Note that a connecting method other than the example of this embodiment may be employed as the method of connecting the memory 12 and the CPU 11. For example, optical connection may be employed for a part or all of the connection. Connection between the CPU 11 and the memory 12 may be shared physically using a bus or the like. In this embodiment, an example in which the memory 12 is used by one CPU 11 is described. However, the memory 12 may be shared by two or more CPUs.

The CPU 11 according to this embodiment is provided with a plurality of processing units and a plurality of execution contexts. Processing of each instruction is divided into stages (processing elements) that can be executed independently, and the respective stages are mutually connected such that an input for one is an output from a preceding stage and an output from one is an input for a subsequent stage. Accordingly, the CPU can perform processing in the respective stages in parallel.

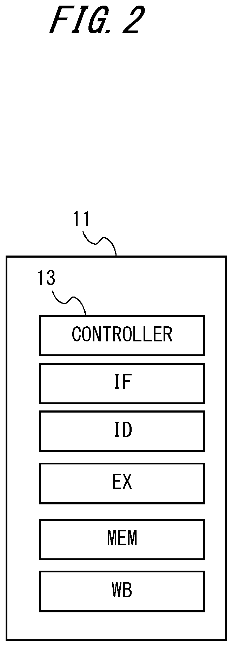

FIG. 2 is a view showing the configuration of the CPU 11 according to this embodiment. In this embodiment, the plurality of stages for processing an instruction are instruction fetch, instruction decode (and register fetch), instruction execute, memory access, and register write back. These stages are processed in the stated order. In order to perform processing according to these stages, the CPU 11 is provided with a processing unit IF for performing instruction fetch, a processing unit ID for performing instruction decode, a processing unit EX for executing an instruction, a processing unit MEM for performing memory access, and a processing unit WB for performing register write back. Since the respective stages are processed in the order described above, terms such as "preceding stage" and "subsequent stage" are used in this disclosure upon specifying a stage in a relative manner. For example, in the relationship of the processing unit IF and the processing unit ID, the processing unit IF is a processing unit for a preceding stage and the processing unit ID is a processing unit for a subsequent stage.

The CPU 11 is further provided with a controller 13 that controls the plurality of processing units mentioned above. The controller 13 controls the plurality of processing units such that a processing unit for a preceding stage consecutively performs processing of a plurality of instructions, and then a processing unit for a subsequent stage consecutively performs processing of the plurality of instructions for which processing by the processing unit for the preceding stage has ended. The controller 13 controls the plurality of processing units such that instructions of threads assigned to different groups are executed at the same time point. The group will be described later.

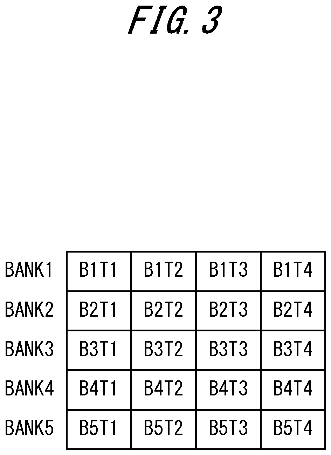

FIG. 3 is a view showing the configuration of an execution context to be processed by the CPU 11 in this embodiment. In this embodiment, an example in which one thread is assigned for every execution context will be described. Each thread includes, in the order of intended execution, instructions included in a program to be executed with the thread.

In this embodiment, a plurality of threads to be executed consecutively by respective processing units are grouped. Units in which threads are grouped (assigned) are hereinafter called "banks" or "groups." The number of groups that can be processed simultaneously is the same as the number of processing units (number of stages in a conventional instruction pipeline). Therefore, in this embodiment, the number of banks is the same as the number of processing units.

The number of execution contexts in the CPU 11 (number of threads executed in parallel) is determined based on the number of banks (number of stages in a pipeline or number of processing units) and the number of execution contexts per bank. The number of execution contexts is represented with the following formula.

Number of execution contexts = "Number of banks" x "Number of execution contexts per bank"

As mentioned above, the number of banks is the same as the number of processing units. Therefore, the number of banks in this embodiment is five. In this embodiment, the number of execution contexts per bank is set as four. Therefore, in this embodiment, 20 (5 x 4) execution contexts are prepared for one CPU 11, and 20 threads assigned to the execution contexts are executed in parallel.

Although the number of banks is five in this embodiment, the number of banks is not limited to five and is determined in accordance with the number of processing units provided to the employed CPU. Although a case where the number of execution contexts per bank is four is described in this embodiment, the number of execution contexts per bank may be a different number or may be changeable through setting. Note that there is a settable upper limit to the number of execution contexts to be set, due to hardware restrictions of the CPU 11 (the number of circuits created on the CPU 11).

In this embodiment, a thread assigned to each execution context is shown by a combination of the bank number and the thread number within a bank for ease of understanding. For example, in the example shown in FIG. 3, a thread B1T1 is a first thread in bank 1, and a thread B5T4 is a fourth thread in bank 5.

### <Flow of processing>

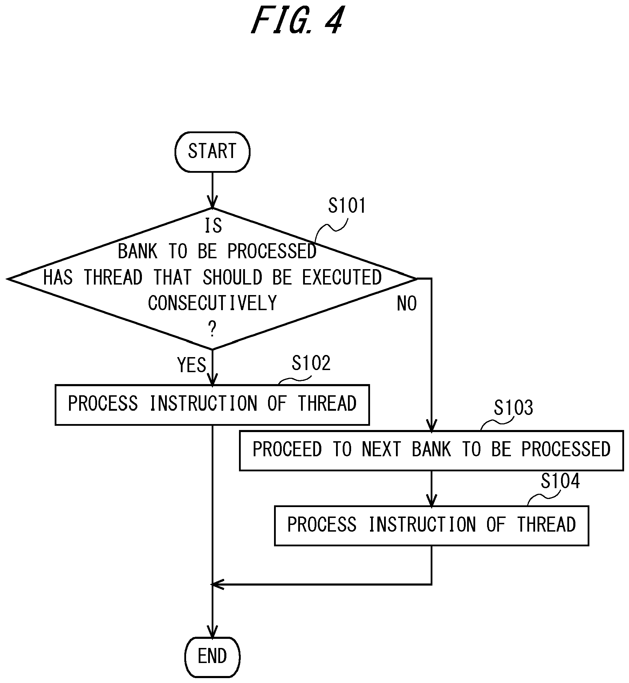

Upon processing an instruction, as described above, the CPU 11 according to this embodiment divides one instruction into a plurality of stages (processing elements) to be executed by processing units prepared for the respective stages. Since the plurality of processing units are capable of operating simultaneously, a cyclic instruction pipeline in which a plurality of instructions are processed in parallel by causing different timings for processing of respective stages has been conventionally used. In this embodiment, such an instruction pipeline is controlled such that processing of a plurality of threads is consecutively performed while changing the thread to be processed, and then processing according to a subsequent stage for the plurality of threads is consecutively performed by a processing unit according to the subsequent stage while changing the thread to be processed. A flowchart shown in FIG. 4 is one example of the flow of processing for realizing such control.

FIG. 4 is a flowchart showing the flow of control in each processing unit according to this embodiment. The control shown in this flowchart is executed repeatedly in each clock cycle by each of the five processing units provided to the CPU 11, while the CPU 11 according to this embodiment performs parallel processing.

In the control in each processing unit, the CPU 11 determines whether or not a thread including an instruction that should be processed is present in a bank (e.g., bank 1) to be processed in the current clock cycle (step S101). In the case where a thread including an instruction that should be processed is present (in other words, in the case where a thread that should be executed subsequently is remaining in the bank), the CPU 11 processes the instruction of the thread (e.g., thread B1T2) including the instruction that should be processed in the bank currently being processed (step S102). In the case where a thread including an instruction that should be processed is absent in the bank (in other words, in the case where consecutive execution of threads in the bank has ended), the CPU 11 switches to the next bank (e.g., bank 2) to be processed (step S103). The CPU 11 processes an instruction of a thread (e.g., thread B2T1) including an instruction that should be processed in the bank to be newly processed (step S104).

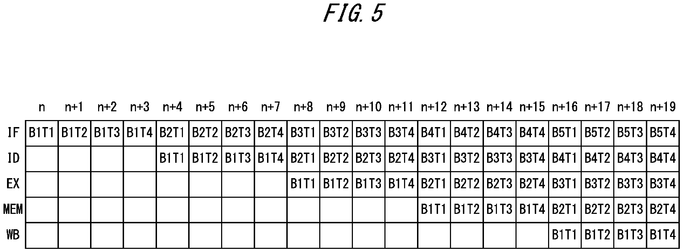

FIG. 5 is a view showing one example of a clock cycle in the case of performing the control according to this embodiment. For example, by the control shown in FIG. 4 being performed with respect to the thread configuration shown in FIG. 3, processing is realized in such an order that the processing unit IF processes four threads B1T1 to B1T4 of the bank 1, and then the threads B1T1 to B1T4 are processed by the subsequent processing unit ID. When the processing by the processing unit ID ends, the threads B1T1 to B1T4 are processed by the processing unit EX. Thereafter, processing is passed to a subsequent processing unit every time each processing unit completes processing of the threads B1T1 to B1T4.

In this manner, the controller 13 controls the plurality of processing units such that, in the case where a plurality of threads are to be executed, a processing unit for a preceding stage consecutively performs processing of instructions according to at least two or more threads (two or more threads assigned to a first bank in this embodiment) out of the plurality of threads, and then a processing unit for a subsequent stage consecutively performs processing of instructions according to the two or more threads for which processing by the processing unit for the preceding stage has ended.

With this embodiment, processing for each stage according to each instruction can be delayed by at least four clock cycles (the number of execution contexts per bank). For example, for an instruction of the thread B1T1, instruction fetch is performed by the processing unit IF in clock cycle n, then instruction decode and register fetch are performed by the processing unit ID in clock cycle n+4, execute is performed by the processing unit EX in clock cycle n+8, memory access is performed by the processing unit MEM in clock cycle n+12, and write back is performed by the processing unit WB in clock cycle n+16 to complete processing. By such control being performed, sufficient time can be provided between a preceding stage and a subsequent stage to enable a configuration for an instruction pipeline with little waste, even in the case of performing processing in which long time is spent on waiting for a response in memory access or the like.

In the example shown in FIG. 5, the clock cycles are of a case where processing for all instructions ends in one clock cycle in all processing units. It is possible that processing by a processing unit is not completed in one clock cycle due to some reason, and the clock cycles are not limited to the example shown in FIG. 5.

The controller 13 controls the plurality of processing units such that, after processing of instructions according to two or more threads assigned to the first bank has ended, instructions according to two or more threads assigned to a second bank are processed while the instructions according to the two or more threads assigned to the first bank are processed by another processing unit. That is, while one processing unit is processing a thread of one bank, a preceding processing unit that has completed processing of the bank processes a thread of the next bank. For example, while the processing unit ID processes threads (threads B1T1 to B1T4) of bank 1, the processing unit IF that has completed processing of bank 1 processes threads B2T1 to B2T4 of bank 2. Therefore, with this embodiment, delay of processing as described above is possible, and the overall throughput can be improved.

After one loop of the clock cycles shown in FIG. 5, the thread B1T1 is processed by the processing unit IF again. Since each thread includes, in the order of intended execution, instructions included in a program to be executed with the thread as described above, an instruction processed in the next clock cycle is an instruction included in the thread B1T1 and following an instruction processed in the previous clock cycle.

With the embodiment described above, sufficient time can be provided between a preceding stage and a subsequent stage to enable a configuration for an instruction pipeline with little waste, even in the case of performing processing in which long time is spent on waiting for a response in memory access or the like. Thus, parallel processing by the CPU 11 can be performed more efficiently.

Conventionally, there has been a mechanism in which a temporary memory is provided within a processor to cache data, in order to avoid the occurrence of a state described above where many clock cycles are consumed for processing of memory access. However, there has been a problem that such a mechanism causes complexity in a processor. With the embodiment described above, it is possible to delay processing according to each instruction without a decrease in the overall throughput. Therefore, it is possible to omit a temporary memory that has been conventionally provided within a processor to prevent complexity in the configuration of the processor. Note that a temporary memory may be not omitted upon implementation of this disclosure.

Further, since threads are processed in parallel for each bank in the embodiment described above, a processing unit can be used without waste, and it is possible to improve the overall throughput of a processor.

As described above, the embodiment described above is an exemplification. The processor and the method according to this disclosure are not limited to the specific configuration. In implementation, a specific configuration in accordance with an embodiment may be appropriately employed, or various improvements or modifications may be performed. For example, the disclosure may be employed in a single-core CPU or may be employed in a multi-core CPU.

## Claims

1. A processor comprising:
a plurality of processing units that are prepared for processing an instruction to be implemented at a plurality of stages and that correspond to the respective stages; and
control means for controlling the plurality of processing units such that a processing unit for a preceding stage consecutively performs processing of a plurality of instructions, and then a processing unit for a subsequent stage consecutively performs processing of the plurality of instructions for which processing by the processing unit for the preceding stage has ended.

2. The processor according to claim 1, further comprising:
a plurality of execution contexts for executing a plurality of threads,
wherein the control means controls the plurality of processing units such that, in a case where the plurality of threads are to be executed, a processing unit for a preceding stage consecutively performs processing of instructions according to at least two or more threads out of the plurality of threads, and then a processing unit for a subsequent stage consecutively performs processing of the instructions according to the two or more threads for which processing by the processing unit for the preceding stage has ended.

3. The processor according to claim 2, wherein the plurality of threads are assigned to any of a plurality of groups, and the control means controls the plurality of processing units such that instructions of threads assigned to different groups are executed at a same time point.

4. The processor according to claim 3, wherein the number of threads assigned to the group is changeable through setting.

5. The processor according to claim 3 or 4, wherein the groups are prepared in a number based on the number of processing units provided to the processor.

6. The processor according to any one of claims 3 to 5, wherein the control means controls the plurality of processing units such that, after processing of instructions according to two or more threads assigned to a first group has ended, instructions according to two or more threads assigned to a second group are processed while the instructions according to the two or more threads assigned to the first group are processed by another processing unit.

7. The processor according to any one of claims 2 to 6, wherein the control means controls the plurality of processing units such that a processing unit for a preceding stage consecutively performs processing of instructions according to all threads to be processed, and then a processing unit for a subsequent stage consecutively performs processing of the instructions according to all threads to be processed.

8. A method of controlling a processor including a plurality of processing units that are prepared for processing an instruction to be implemented at a plurality of stages and that correspond to the respective stages,
the method comprising:
a step of causing a processing unit for a preceding stage out of the plurality of processing units to consecutively perform processing of a plurality of instructions; and
a step of causing a processing unit for a subsequent stage to consecutively perform processing of the plurality of instructions after the processing unit for the preceding stage has consecutively performed processing of the plurality of instruction.
